## Europäisches Patentamt
## European Patent Office
## Office européen des brevets

(11) Publication number: **0 013 869**
A1

# EUROPEAN PATENT APPLICATION

(21) Application number: **79850109.4**

(22) Date of filing: **12.12.79**

(51) Int. Cl.³: **F 04 D 29/58**, F 04 D 13/08, H 02 K 9/19

(30) Priority: **18.01.79 SE 7900441**

(71) Applicant: **Flygt AB, Box 1309, S-17125 Solna (SE)**

(43) Date of publication of application: **06.08.80**
**Bulletin 80/16**

(72) Inventor: **Thomaeus, Bengt, Berghemsvägen 5, S-175 38 Järfälla (SE)**

(84) Designated Contracting States: **DE FR GB NL**

(74) Representative: **Larsson, Sten, Flygt AB Box 1309, S-171 25 Solna (SE)**

(54) Device for cooling a submersible sealed motor unit.

(57) This invention concerns a closed cooling system (8) for submersible working units such as an electric motor unit (1) for a pump.

The cooling system contains for instance oil or water and the circulation is obtained by a pump impeller (9) arranged close to an outer surface (7) of the system which surface is colled from its opposite side by an outer passing medium.

A SEALED DRIVING UNIT DEVICE

This invention concerns a cooling device for a sealed driving unit meant for submersible working machines, mainly submersible pumps.

Within the pump technique the development has brought about an ambition to obtain smaller motor units in order to get cheaper motors of low weights. As a diminishing of the motor sizes must not as a consequence diminish the motor effect, a cooling problem arizes. This problem may sometimes be solved by keeping the motor unit submersed in the pumped medium which normally obtains an effective cooling. Sometimes it is however an advantage to arrange the motor unit dry, for instance for facilitating repairing and service work.

Sometimes it is not possible to arrange the pump unit in such a way that the motor unit always remains under the fluid level as this may vary. This means that the motor must be cooled in a sufficient way both when it is submersed in a fluid and when it is surrounded by air.

In order to solve this problem it has been suggested to provide the pump motor with a surrounding casing and let the pumped medium pass between said casing and the motor housing. This solution is sufficient when the pumped medium is clear and free from waste. When pumping other media, the space between the casing and the motor housing can be filled by waste which means that both the cooling effect and the pump effect decrease.

It is even known to arrange a cooling housing for cooling of oil, which then is brought into and through the motor housing. The motor windings are then cooled by direct contact with the oil. Besides a certain risque for problems with pollutions in the oil, this even means an effect loss in the motor which cannot be neglected.

The problem that the invention is meant to solve is thus to obtain a cooling of a driving unit, which can be situated above or below a fluid level. Further the cooling must be independant of and separated from the pumped medium and out of that the cooling device shall not, if possible, influence on the efficiency of the motor.

According to the Swedish Patent 327 904, it has been tried to solve the problem by providing the driving motor of a pump with a partly surrounding casing, which is connected to a cooled oil housing. A pump that is arranged in the latter brings oil to circulate upwards over a partition wall arranged in the casing, whereby the cooling oil is brought to circulate along the outside of the motor and divert the heat from the latter.

This construction has however in practice shown out not to be sufficient, mainly of two reasons. On the one hand, a uniformous flow around the motor housing has not been obtained and on the other hand it has not been possible to reach the flow speed that is necessary for making the cooling effective.

According to this invention the problems mentioned above has been solved by arranging of a pump on the driving shaft close to one of the gable walls of the driving unit, which gable wall is cooled by working medium passing on its opposite side.

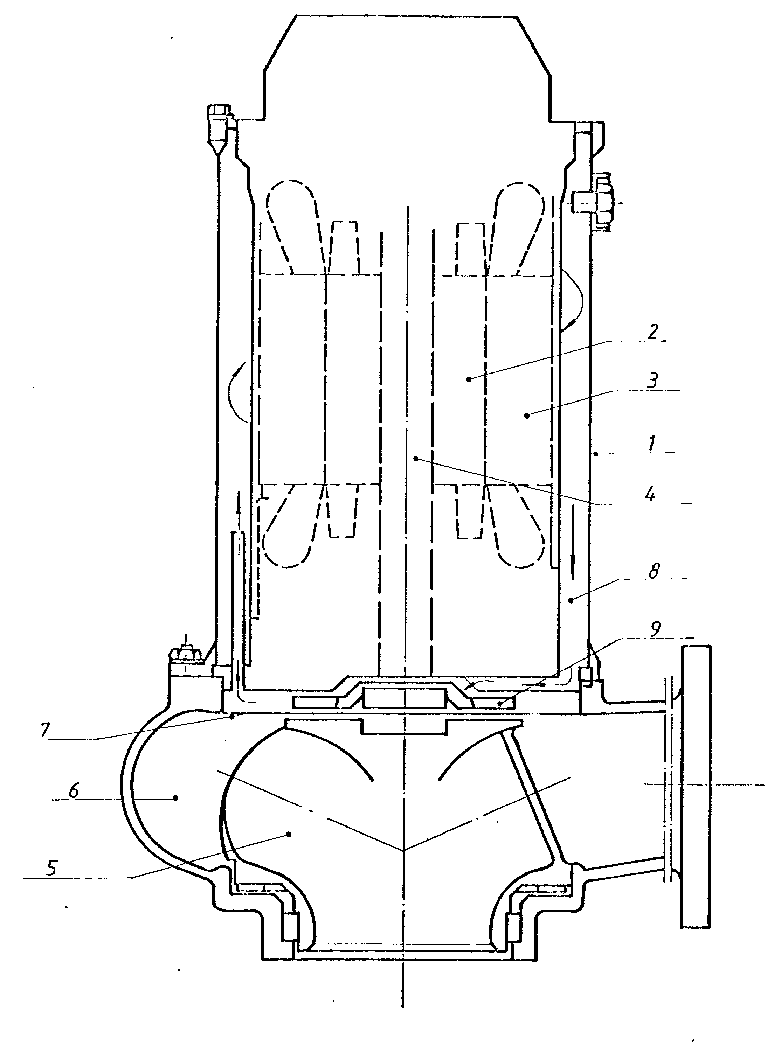

The invention is described more closely below with reference to the enclosed drawing. In the drawing 1 stands for a submersible driving unit having a motor unit consisting of rotor 2 and stator 3, 4 stands for a driving shaft, 5 an impeller, 6 a pump housing, 7 a gable wall, 8 a cooling liquid room and 9 an impeller for the cooling liquid.

As was mentioned earlier the motor unit is surrounded by a closed cooling system 8 containing oil, water or some other fluent medium. In order to obtain an effective cooling the medium must be circulated by force as self-circulation only is insufficient. To make the heat transfer reach a maximum value, it has shown out that the flowing must be as intense as possible by the surface where the medium emits its heat, here by the gable wall 7. According to the invention a pump impeller 9 of centrifugal type is arranged close to the gable wall 7, the opposite side of which is cooled by the intense fluid current . in the pump housing 6.

Because of the fact that the impeller 9 is arranged close to the wall 7, a very intense current is obtained along said wall thus optimizing the heat transfer. Tests have shown that the heat transfer may be increased by more than three times through this location compared with if the impeller is located somewhere else in the cooling medium housing.

The cooling medium is thus completely parted from and independant of the pumped medium. The only condition that must be fulfilled is that the latter may not be so warm that the heat increase exceeds the maximum allowable temperature in the motor.

The cooling medium could in principle be the same oil that is used for cooling and lubricating of the mechanical seals between pump unit and motor unit. It is however often suitable to use different media for the two principes.

By the invention has thus a device been obtained for cooling a sealed driving unit by help of forced flowing, so that no zones with non-moving cooling medium occur. As the cooling system is entirely parted from the

_3_

pumped medium and as the device is independant of that medium, it is even possible to use it for other purposes than pumping. There is no risque for clogging. Another advantage by the cooling system is that it can be made smaller than conventional water cooled motors.

From a productional point of view the device has the special advantage that by manufacturing of pumps, the same driving unit may be used for a great number of different pump applications thereby decreasing the store demand.

CLAIMS

1 A device for cooling of a sealed driving unit (1), including a motor unit (2, 3) with bearings and seal unit, which driving unit is meant for submersible machines, for instance pumps, where a pump (9) arranged within the unit (1), transports cooling medium in the latter, c h a r a c t e r i z e d  in, that the pump (9) is a pump impeller, preferably of centrifugal type, arranged on the driving shaft (4) of the driving unit (1), close to one of the gable walls (7) of the unit (1), which gable wall (7) is cooled by current working medium on its opposite side.

2 A device according to claim 1, c h a r a c t e r i z e d  in, that the inlet of the impeller (9) is heading the motor unit (2, 3) while the cooling medium leaves the impeller (9) in parallel with the plane of the gable wall (7).

3 A device according to claim 2, c h a r a c t e r i z e d  in, that partition walls are arranged in the plane of the impeller (9) which walls part the cooling medium currents to and from the impeller(9).

0013869

European Patent Office

**EUROPEAN SEARCH REPORT**

0013869

Application number

EP 79 85 0109

| DOCUMENTS CONSIDERED TO BE RELEVANT | | | CLASSIFICATION OF THE APPLICATION (Int. Cl. ) |
|---|---|---|---|
| Category | Citation of document with indication, where appropriate, of relevant passages | Relevant to claim | |
| X | <u>US - A - 3 653 785</u> (DAHLGREN)<br>* The whole document *<br><br>-- | 1,2,3 | F 04 D 29/58<br>13/08<br>H 02 K 9/19 |
| X | <u>DE - A - 1 900 233</u> (BURGER)<br>* Pages 6,7; figure 2 *<br><br>---- | 1,2,3 | |

TECHNICAL FIELDS SEARCHED (Int.Cl. )

F 04 D
H 02 K

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| The present search report has been drawn up for all claims | | |
|---|---|---|
| Place of search<br>The Hague | Date of completion of the search<br>03-04-1980 | Examiner<br>DE SCHEPPER |

EPO Form 1503.1 06.78